# EUROPÄISCHE PATENTSCHRIFT

(11) **EP 3 069 830 B1**
(45) Veröffentlichungstag und Bekanntmachung des Hinweises auf die Patenterteilung: **26.02.2020**
(21) Anmeldenummer: 16160656.1
(22) Anmeldetag: 16.03.2016
(51) Int. Cl.: B25J 15/00, B25J 15/12, B25J 11/00

(54) **GREIFERELEMENT MIT EINEM ELASTISCH IN EINER VORZUGSRICHTUNG VERFORMBAREN BIEGEELEMENT UND HALTERUNG**
GRIPPER ELEMENT HAVING AN ELASTICALLY DEFORMABLE BENDING ELEMENT IN A PREFERRED DIRECTION AND SUPPORT
ORGANE DE PREHENSION COMPRENANT UN ELEMENT COURBE DEFORMABLE ELASTIQUEMENT DANS UNE DIRECTION PREFERENTIELLE ET SUPPORT

(30) Priorität: 19.03.2015 DE 102015204986
(43) Veröffentlichungstag der Anmeldung: 21.09.2016
(73) Patentinhaber: Fraunhofer-Gesellschaft zur Förderung der angewandten Forschung e.V., 80686 München (DE)
(72) Erfinder: Boye, André, 01156 Dresden (DE); Weyrauch, Thomas, 01237 Dresden (DE)
(74) Vertreter: Pfenning, Meinig & Partner mbB

(56) Entgegenhaltungen:
- DE-T5-112011 101 331
- JP-A- H09 103 983
- US-A- 3 343 864
- US-A- 5 251 538

## Beschreibung

Die Erfindung betrifft ein Greiferelement mit mindestens einem elastisch in einer Vorzugsrichtung verformbaren Biegeelement, das in einer Halterung befestigbar und über die Halterung an ein Steuer- oder regelbares Pneumatik- oder Hydrauliksystem anschließbar ist. Solche Biegeelemente werden auch als "Beugefinger" bezeichnet und zeichnen sich dadurch aus, dass zwei diametral gegenüberliegende Seiten eine unterschiedliche Dehnbarkeit aufweisen und beide Seiten aber biegbar sind. In den Hohlraum kann dann ein Fluid mit erhöhtem Druck eingebracht werden, wodurch sich das Greiferelement in Richtung der Seite mit der geringeren Dehnbarkeit verbiegt. Bei Reduzierung des Druckes im Inneren wird diese Bewegung rückgängig gemacht und das Greiferelement wird wieder gerade ausgerichtet oder nimmt seine ursprüngliche Form wieder ein. Durch eine gezielte Beeinflussung des Innendrucks im elastisch verformbaren Biegeelement können die jeweilige Verbiegung und damit die wirkenden Kräfte beim Greifen gezielt beeinflusst werden.

Bei Anwendungen bei denen erhöhte Anforderungen gestellt werden, wie dies beispielsweise der Umgang mit Lebensmitteln, in der Pharmaindustrie, in der Forschung und insbesondere in der Medizin eine Einhaltung sehr hoher hygienischer Standards sind, müssen Vorsorgemaßnahmen für eine entsprechend geeignete hygienische Ankupplung/Installation in ein Kupplungs- oder Haltesystem berücksichtigt werden. Dies betrifft einmal die Vermeidung von Verschmutzungen, die sich an bestimmten kritischen Positionen absetzen und dort anhaften können und zum anderen die Möglichkeit einer einfachen und sicheren vollständigen Reinigung. Entsprechend geeignete technisch und hygienisch Lösungen sind aber zum jetzigen Zeitpunkt nicht im erforderlichen Maße verfügbar.

Die Herstellung qualitativ hochwertiger und hygienisch einwandfreier Produkte hat in der Lebensmittelindustrie höchste Priorität und wird gesetzlich gefordert. Durch eine automatisierte Verarbeitung wird ein wichtiger Beitrag zur Lebensmittelsicherheit geleistet, da hierdurch die Reproduzierbarkeit erhöht und der Mensch als größte Kontaminations- und Unsicherheitsquelle vom händischen Eingriff bei der Verarbeitung ausgeschlossen werden kann. Allerdings bedarf es dazu einer technisch und hygienisch geeigneten Lösung für die Handhabung z.B. von auch unverpackten Lebensmitteln. Derartige Lösungen sind zum jetzigen Zeitpunkt auf dem Markt noch nicht verfügbar. Wesentliche Gründe dafür sind, neben den hohen hygienischen Anforderungen, die Produktvielfalt in der Lebensmittelverarbeitung und eine noch nicht im erforderlichen Maße entwickelte Greifertechnik, die flexibel auf die unterschiedlichen Produkteigenschaften reagieren kann. Ähnliche Probleme bestehen aber auch in Gefahrenbereichen von chemischen oder biologischen Laboren.
Mit Elastomergreifern können Produktschutz und Sicherheitsaspekte besser als bisher berücksichtigt werden.

Ein wesentliches Kriterium für den Einsatz von Elastomergreifern ist, neben dem hohen Grad an Flexibilität, die geschlossene Form, die prinzipiell eine hygienische Gestaltung des Greifsystems ermöglicht. Jedoch weisen derzeitige Systeme erhebliche Schwachstellen in der hygienegerechten Umsetzung auf, was in Folge zu unkalkulierbaren Risiken führt.

Der Einsatz von Beugefingern erfolgte bislang vorwiegend in Bereichen ohne relevante Hygieneanforderungen. Demzufolge fand die Ankupplung/Verbindung mit herkömmlichen Schlauchtüllen in Kombination mit Schlauchschellen statt. Dies stellt aber eine potentielle Gefahr insbesondere in der Lebensmittel- oder Pharmaindustrie mit hohen Hygieneanforderungen dar.

Bei diesen herkömmlichen Greifersystemen werden zur Befestigung des elastisch verformbaren Greiferelements eine Spannmutter, eine geschlitzte Hülse und ein Austreiber eingesetzt. Durch Anziehen der Spannmutter bewegt sich der Austreiber in Richtung der geschlitzten Spreizhülse, drückt diese auseinander und presst somit den Bereich des elastisch verformbaren Biegeelements die Innenseite eines Kupplungsblocks. Dabei gibt es eine kritische Klemmstelle, zwischen dem konischen Teil des Austreibers und der Innenwand des elastisch verformbaren Biegeelements. Beim Spannen der Spannmutter bewegt sich eine umlaufende Außenkante des Austreibers entlang der inneren Oberfläche des elastisch verformbaren Biegeelements und es kann zu einem Abtrag von Werkstoff auch in Form von Partikeln kommen, die sich in diesem Bereich absetzen und so eine kritische Verschmutzung oder einen Ansatz für das Absetzen von Keimen in diesem Bereich bilden können.

Die elastisch verformbaren Biegeelemente unterliegen im Einsatz einer ständigen Materialbeanspruchung, d.h. das Material dehnt sich bei jedem Bewegungszyklus an der Klemmstelle aus und zieht sich anschließend wieder zusammen. Dies erzeugt Reibungen zwischen den Materialien in der Klemmstelle, wodurch unerwünschte Substanzen in das System ein- oder ausdringen können, was durch die Druckwirkung des eingesetzten Fluids noch unterstützt wird.

Bei anderen bekannten und üblicherweise eingesetzten technischen Lösungen wird ein zu klemmendes Element (z.B. Kabel oder Schlauch) durch eine Durchgangsöffnung in eine Verschraubung geführt. Anschließend erfolgt die Klemmung durch das Anziehen einer Überwurfmutter, wodurch sich im Inneren ein Dichteinsatz staucht und somit den Schlauch oder das Kabel klemmt. Diese Art der Klemmung ist in hygienischer Ausführung (geschlossenes System) in Hygienebereichen weit verbreitet und entspricht den einschlägigen Richtlinien.

Der Nachteil dieser Verbindungssysteme besteht darin, dass bisweilen unbewegte Elemente geklemmt wurden. Bei bewegten Elementen, wie ein Beugefinger kommt es zu Reibungen und Longitudinalbewegungen in der Klemmstelle, wodurch unerwünschte Substanzen in das System hinein- oder herausdringen können. Ferner ist infolge der Reibung in der Klemmstelle mit hohen Materialbelastungen zurechnen, was zu Materialbeschädigungen und zu verfrühten Ausfallzeiten führen kann.

So ist aus US 5,251,538 A eine Vorrichtung gemäß dem Oberbegriff des Anspruchs 1 zur Handhabung von Werkstücken mit einem elastisch verformbaren Element bekannt.

Es ist daher Aufgabe der Erfindung eine Verbindung zwischen einem elastisch verformbaren Biegeelement und einer Halterung zur Verfügung zu stellen, die erhöhten hygienischen Anforderungen in sensiblen Bereichen entspricht und eine hohe Betriebssicherheit gewährleistet.

Erfindungsgemäß wird diese Aufgabe mit einem Greiferelement, das die Merkmale des Anspruchs 1 aufweist, gelöst. Vorteilhafte Ausgestaltungen und Weiterbildungen der Erfindung können mit in untergeordneten Ansprüchen bezeichneten Merkmalen realisiert werden.

Das erfindungsgemäße Greiferelement ist mit mindestens einem elastisch in einer Vorzugsrichtung verformbaren Biegeelement und einer Halterung gebildet. Bei einem Biegeelement, das an einer Stirnseite mit einer Öffnung versehen und ansonsten innen hohl ist, ist in einem nicht zum Biegen vorgesehenen Bereich, in dem auch die Öffnung angeordnet ist, ein radial umlaufender überstehender Flansch so ausgebildet, dass er an einer Fläche eines Basiselements der Halterung aufliegt und an der gegenüberliegenden Fläche an einer Stirnfläche eines Befestigungselements, das mit dem Basiselement verbindbar ist, anliegt. Das Befestigungselement presst den Flansch mit einer vorgebbaren Druckkraft gegen die Fläche des Basiselements. Das Biegeelement ist aus einem elastisch verformbaren Material gebildet. Der so fixierte Flansch kann eine Abdicht- und Befestigungsfunktion für ein Biegeelement erfüllen. Der Flansch kann beispielsweise die Form eines Kreisrings, einer Ellipse oder auch eine mehreckige Geometrie aufweisen. Es kann am Flansch auch min destens eine Ausformung am radial äußeren Rand vorhanden sein, mit der eine definierte Winkelausrichtung des Biegeelements eingehalten werden kann. Eine Ausformung kann beispielsweise eine nasenförmige Ausstülpung oder ein eingezogener Bereich sein. So kann ein Flansch eines Biegeelements in eine komplementär dazu ausgebildete Aufnahme des Basiselements eingesetzt und anschließend in der gewünschten Winkelausrichtung mit Hilfe des Befestigungselements fixiert werden.

Ausgehend vom Flansch in Richtung Öffnung erstreckt sich dort ein hohlzylinderförmig oder in äquivalenter Form (z.B. innen hohl elliptisch, mehreckig) ausgebildeter Bereich des Biegeelements, so dass dort ein Anschlussstutzen, über den ein Fluid in das Innere des Biegeelements zu- und abführbar ist, eingeführt werden kann. Dieser hohlzylinderförmige Bereich ist nicht zum Verbiegen vorgesehen.

Ein Anschlussstutzen kann auch integraler Bestandteil des Biegeelements sein, so dass beide Elemente ein einziges Teil sind. Für beide Elemente kann ein gleicher Werkstoff gewählt werden. Es kann aber auch der Anschlussstutzen aus einem Werkstoff höherer Festigkeit, als der Werkstoff aus dem das Biegeelement gebildet ist, gebildet sein. Dabei können beide Elemente durch ein geeignetes Verfahren, wie z.B. Vulkanisation oder Schweißen stoffschlüssig miteinander verbunden worden sein.

Es besteht auch die Möglichkeit, das Befestigungselement und der Anschlussstutzen als ein Teil ausgebildet sind. Sie können vorteilhaft aus dem gleichen Werkstoff bestehen und so gefertigt werden.

Wird ein Fluid in das Innere des Biegeelements zugeführt, verbiegt sich dieses infolge des erhöhten Innendrucks in Richtung des zumindest weniger dehnbaren Bereichs an einer Seite. Bei einem sich verkleinernden Innendruck erfolgt eine Bewegung in die entgegengesetzte Richtung. Der Innendruck kann dabei sogar bis unterhalb des Umgebungsdruckes (Atmosphärendruck) reduziert werden.

Die äußere Oberfläche des Anschlussstutzens und/oder die innere Oberfläche des hohlzylinderförmigen Bereichs des Biegeelements können eine Profilierung aufweisen, so dass zusätzlich zu einem Kraftschluss auch eine formschlüssige Verbindung von Biegeelement und Anschlussstutzen erreicht werden kann. Der Anschlussstutzen kann, wie das Biegeelement mit dem Befestigungselement am Basiselement gehalten werden.

Für eine verbesserte Abdichtwirkung und Fixierung kann an der Fläche, an der der Flansch am Basiselement anliegt, eine um das Biegeelement umlaufende Erhebung oder Vertiefung und an der dieser Fläche zugewandten Fläche des Flansches eine komplementär dazu ausgebildete Vertiefung oder Erhebung ausgebildet sein. Die Ränder oder Kanten solcher Erhebungen und Vertiefungen sollten abgerundet sein.

Eine dem Flansch zugewandte Stirnfläche des Befestigungselements, die im fixierten Zustand am Flansch anliegt, kann in einem schrägen Winkel geneigt ausgebildet sein. Der Winkel sollte im Bereich 3° bis maximal 10° liegen, bevorzugt 5 ° betragen. Die Neigung sollte so gewählt werden, dass die in Richtung Hohlraum des Biegeelements weisende Kante des Befestigungselements tiefer in das Material des Biegeelements im Bereich des Flansches im fixierten Zustand eingepresst ist.

Basiselement und Befestigungselement können mittels Schraub- oder Bajonettverbindung miteinander verbunden werden. Dabei sollte eine konstante Druckkraft zwischen den sich berührenden Flächen des Flansches, des Basiselementes und des Befestigungselements eingehalten werden können. Dies kann insbesondere bei einer Schraubverbindung mit einem Anschlag, der am Basiselement, als Begrenzungselement für eine Bewegung des Befestigungselements, ausgebildet ist, erreicht werden. Zwischen der Stirnfläche des Befestigungselements, die mit der Oberfläche des Flansches in Kontakt steht kann auch eine Gleitscheibe angeordnet sein, mit der ein direkter Kontakt zwischen Flansch und Stirnfläche vermieden werden kann. Dadurch kommt es zu keiner Reibung bei der Befestigung des Befestigungselements am Basiselement in diesem Bereich von Flansch und Stirnfläche des Befestigungselements.

Bei einem erfindungsgemäßen Greiferelement können mehrere Biegeelemente jeweils mit einem Basiselement an der Halterung verbunden werden. Die Biegeelemente können dann zusammen wirken. So können beispielsweise drei Biegeelemente mit jeweils konstanten Winkelabständen zueinander angeordnet sein und sich bei erhöhtem Innendruck aufeinander zu verbiegen. Dadurch kann ein Gegenstand ergriffen werden. Ist dann ein erfindungsgemäßes Greiferelement mit einem Roboter verbunden, kann der ergriffene Gegenstand manipuliert, insbesondere bewegt werden.

Durch die einfachen Möglichkeiten zur Montage und Demontage sowie die Ausbildung der einzelnen Elemente eines erfindungsgemäßen Greiferelements kann eine sichere und effektive Reinigung wegen der guten Zugänglichkeit erreicht werden. Im Betrieb ist aber ein vollständig geschlossenes System vorhanden, wodurch ein Austritt von Fluid oder Partikeln vermieden werden kann. Die Biegeelemente können hygienisch unbedenklich ausgebildet, einfach und kostengünstig hergestellt werden.
Ein Biegeelement kann kraft- und/oder formschlüssig mit dem Anschlussstutzen und zusätzlich mit dem Befestigungselement mit dem Greiferelement verbunden werden.

Der Flansch eines Biegeelements bildet einen Dichtungskragen und trennt den Innenbereich vom Außenbereich/Produktbereich. Der Flansch kompensiert die longitudinale ausdehnungsbedingte Bewegung des Biegeelements, so dass die Kontaktflächen im Dichtungsbereich, in dem Flächen des Flansches mit Flächen des Befestigungselements und Basiselements keinerlei Relativbewegungen erfahren. Die Klemmung des Flansches wird durch die Verbindung von Befestigungselement am Basiselement erreicht. Durch einen bereits erwähnten Anschlag kann eine definierte und reproduzierbare Pressung des Flansches im Dichtbereich erreicht werden. Somit ist eine hermetische Trennung zum Produktbereich realisierbar. Unerwünschte Substanzen/Stoffe können nicht in das System hinein- oder herausdringen. Außerdem kann durch die Flanschgeometrie die Zugänglichkeit der Reinigung verbessert und somit hygienegerechte Gestaltungsrichtlinien eingehalten werden.

Ein Biegeelement kann beispielsweise aus Silikon als dehnbares und elastisch verformbares Material hergestellt werden. Die Herstellung kann einteilig im Spritzgussverfahren erfolgen. Es besteht aber auch die Möglichkeit, einen Flansch als gesondertes Teil zu fertigen und dann am Biegeelement zu befestigen, was beispielsweise durch Vulkanisation oder Verschweißen erreicht werden kann.

Dadurch, dass ein Greiferelement im Betrieb ein vollständig geschlossenes System bildet, ist der Produktbereich optimal vom Innenleben (Versorgungsfluid, Schlauchankupplung etc.) getrennt. So kann zwischendurch auch eine Reinigung und Desinfektion im montierten Zustand vorgenommen werden (CIP-fähig).
Nachfolgend soll die Erfindung beispielhaft näher erläutert werden.

Dabei zeigen:

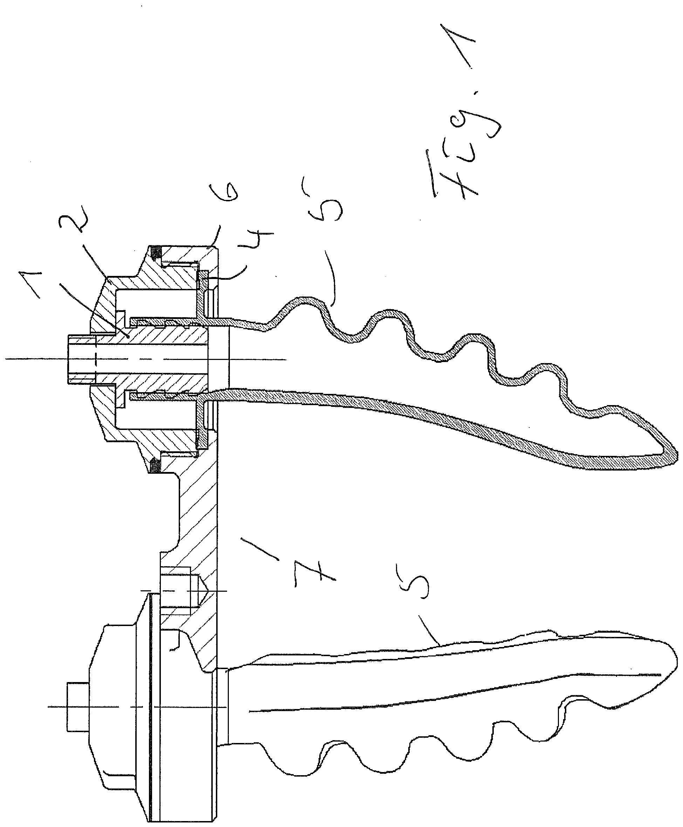

- Figur 1: zwei Biegeelemente eines Beispiels eines erfindungsgemäßen Greiferelements, die jeweils an einem Basiselement einer Halterung befestigt sind und von denen ein Biegeelement in einer Schnittdarstellung gezeigt ist und
- Figur 2: eine vergrößerte Teildarstellung von Figur 1 im Schnitt.

Das Basiselement 6, das Befestigungselement 2 sowie der Anschlussstutzen 1 bestehen hierbei aus poliertem Edelstahl und die verwendeten Dichtelemente sowie die Biegeelemente 5 sind aus einem lebensmittelechten Silikon im Spritzgussverfahren hergestellt.

Die Erfindung kann zum Transport von Lebensmitteln, wie beispielsweise das Aufnehmen von Produkten vom Fließband und das Weiterführen zum Folgeprozess (pick and place) eingesetzt werden. Darunter zählt u.a. das Bestücken von Schnittanlagen oder von Verpackungen. Durch Anlegen eines Unterdrucks öffnet sich das mit mehreren Biegeelementen 5 gebildete Greiferelement und kann über dem zugreifenden Produkt platziert werden. Anschließend sorgt Überdruck im Inneren der Biegeelemente 5 für die eigentliche Greifbewegung, indem sich Biegeelemente 5 aufeinander zu bogenförmig biegen.

Die Biegeelemente 5 können in Aufnahmen eines Basiselements 6 an der Halterung 7 eingesetzt werden. Dabei ist für jedes Biegeelement 5 im Basiselement 6 eine Durchbrechung ausgebildet. Das jeweilige Biegeelement 5 kann dann mit seinem biegbaren Bereich durch die Durchbrechung hindurchgeführt eingesetzt werden. Dabei liegt ein radial umlaufend ausgebildeter Flansch 4 auf einer Fläche des Basiselements 6 auf. Bei dem gezeigten Beispiel ist in diesem Flächenbereich des Basiselements 6 eine umlaufende Erhebung 6.1 ausgebildet, deren Ränder abgerundet sind. Der Flansch 4 weist in diesem Bereich eine komplementär dazu ausgebildete Vertiefung auf, so dass beide Flächen unmittelbar aneinander anliegen und mit der Erhebung 6.1 und der Vertiefung 4.1 eine Art "Labyrintdichtung" bilden. Der Flansch 4 ist bei diesem Beispiel rotationssymmetrisch in Form eines Kreisrings ausgebildet.

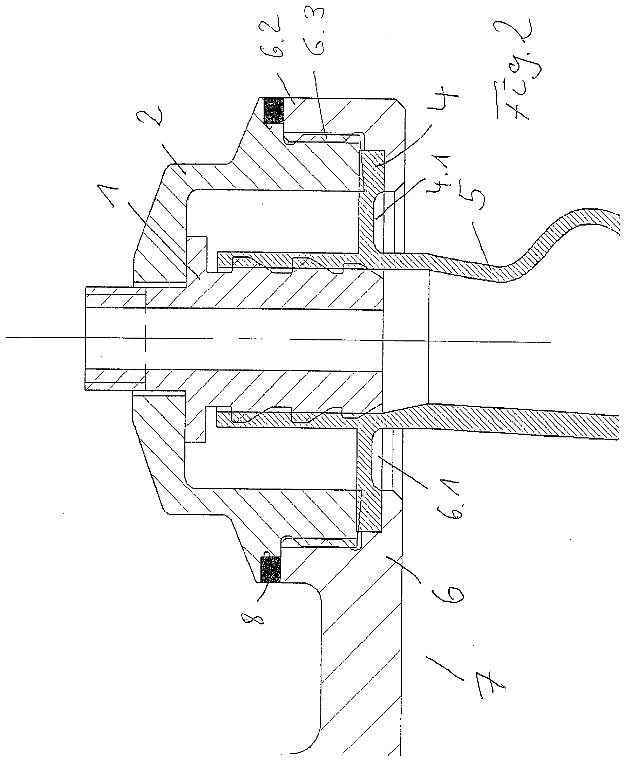

Am Basiselement 6 ist um die Durchbrechung und das Biegeelement 5 herum jeweils ein Innengewinde 6.3 ausgebildet, mit dem ein Befestigungselement 2, das ein entsprechendes Außengewinde aufweist, am Basiselement 6 befestigt werden kann. Das Befestigungselement 2 ist in Form einer Überwurfmutter mit einer Bohrung ausgebildet. Durch die Bohrung ist ein Teil eines Anschlussstutzens 1 nach außen geführt. Über den Anschlussstutzen 1 kann ein Fluid, insbesondere Druckluft in den Hohlraum des Biegeelements 5 zugeführt werden. Bei erhöhtem Innendruck verbiegt sich das in Figur 2 gezeigte Biegeelement 5 nach links, da seine rechte Seite eine größere Dehnbarkeit aufweist.

Der Anschlussstutzen 1 ist in einen hohlzylinderförmig ausgebildeten Bereich des Biegeelements 5 eingeführt und weist bei diesem Beispiel dort an seiner Außenwand eine Profilierung auf, mit der zusätzlich eine formschlüssige Verbindung zur kraftschlüssigen Verbindung, die durch die Elastizität des Biegeelementmaterials und die Dimensionierung des Außendurchmessers des Anschlussstutzens 1 und des Innendurchmessers des hohlzylinderförmigen Bereichs des Biegeelements 5 im Verbindungsbereich beider Elemente, erreicht bar ist.

Durch das Verschrauben von Befestigungselement 2 am Basiselement 6 bewegt sich eine radial äußere Stirnfläche des Befestigungselements 2 in Richtung auf eine Fläche des Flansches 4, so dass bei Berührung eine Druckkraftwirkung zwischen der Stirnfläche des Befestigungselements 2 dem Flansch 4 und der Fläche des Basiselements 6, an der der Flansch 4 anliegt, erreicht wird.

Am Basiselement 6 ist ein Anschlag 6.2 ausgebildet, der eine Wegbegrenzung für das Befestigungselement 2 bildet. In diesem Bereich ist auch eine umlaufende Dichtung 8 vorhanden. Das Befestigungselement 2 kann daher lediglich soweit eingeschraubt werden, bis eine vorab vorgegebene maximale Drucckraft zwischen der Stirnfläche des Befestigungselements 2, dem Flansch 4 und der Auflagefläche des Flansches 4 am Basiselement 6 wirkt.

Das Befestigungselement 2 und der Anschlussstutzen 1 können ein Teil sein. Es besteht aber auch die Möglichkeit, zwei gesonderte Teile dafür einzusetzen. Dann ist in der mittleren Längsachse des Befestigungselements 2 ein Bohrung ausgebildet, durch die ein Teil des Anschlussstutzens 1 nach außen in Richtung auf einen nicht gezeigten Druckbehälter eines Steuer- oder regelbaren Pneumatik- oder Hydrauliksystems geführt ist. Der Anschlussstutzen 1 liegt mit einem kragenförmigen Bereich an einer Innenwand des Befestigungselements 2 an, die ein Widerlager für diesen kragenförmigen Bereich des Anschlussstutzens 1 bildet. Der Anschlussstutzen 1 wird mit der Verschraubbewegung des Befestigungselements 2 und dem hohlzylinderförmigen Bereich des Biegeelements 5 bewegt, so dass der Flansch 4 mit der Stirnfläche des Befestigungselements 2 gegen die mit der Erhebung 6.1 versehene Fläche des Basiselements 6 gepresst und so fixiert. Der hohlzylinderförmige Bereich des Biegeelements 5 ist dabei außen auf dem innerhalb des Befestigungselements 2 angeordneten Bereich des Anschlussstutzens 1 aufgesteckt.

Bei diesem Beispiel ist die Stirnfläche des Befestigungselements 2, die mit dem Flansch 4 in Kontakt gebracht wird, schräg geneigt. Es wurde ein Winkel von 5 ° gewählt. Wie auch aus der Darstellung hervorgeht, ragt die nach innen weisende Kante der Stirnfläche des Befestigungselements 2 tiefer in das Flanschmaterial hinein, als die radial nach außen weisende Kante. Es kann so eine zusätzliche formschlüssige Verbindung und dadurch eine weiter verbesserte Abdichtung zwischen dem Innen- und dem Außenbereich erreicht werden.

## Patentansprüche

1. Greiferelement mit mindestens einem elastisch in einer Vorzugsrichtung verformbaren Biegeelement und einer Halterung, bei dem ein an einer Stirnseite mit einer Öffnung versehenes und ansonsten innen hohles, aus elastisch verformbarem Material gebildetes Biegeelement (5) in einem nicht zum Biegen vorgesehenen Bereich, in dem auch die Öffnung angeordnet ist, einen radial umlaufenden überstehenden Flansch (4) aufweist, der so ausgebildet ist, dass er mit einer Fläche an einer Fläche eines Basiselements (6) der Halterung (7) aufliegt und mit einer gegenüberliegenden Fläche an einer Fläche eines Befestigungselements (2), das mit dem Basiselement (6) verbindbar ist, anliegt und das Befestigungselement (2) den Flansch (4) mit einer vorgebbaren Druckkraft gegen die Fläche des Basiselements (6) presst, **dadurch gekennzeichnet, dass** ein Bereich des Biegeelements (5), der sich ausgehend vom Flansch (4) in Richtung Öffnung erstreckt, hohlzylinderförmig, innen hohl elliptisch oder mehreckig ausgebildet ist, so dass dort ein Anschlussstutzen (1), über den ein Fluid in das Innere des Biegeelements (5) zu- und abführbar ist, einführbar oder ein Anschlussstutzen (1) integraler Bestandteil des Biegeelements (5) ist.

2. Greiferelement nach Anspruch 1, **dadurch gekennzeichnet, dass** die äußere Oberfläche des Anschlussstutzens (1) und/oder die innere Oberfläche des hohlzylinderförmigen Bereichs des Biegeelements (5) eine Profilierung aufweist.

3. Greiferelement nach einem der vorhergehenden Ansprüche, **dadurch gekennzeichnet, dass** der Anschlussstutzen (1) mit dem Befestigungselement (2) am Basiselement (6) fixiert gehalten ist und/oder das Befestigungselement (2) und der Anschlussstutzen (1) als ein Teil ausgebildet sind.

4. Greiferelement nach einem der vorhergehenden Ansprüche, **dadurch gekennzeichnet, dass** an der Fläche, an der der Flansch (4) am Basiselement (6) anliegt, eine um das Biegeelement (5) umlaufende Erhebung (6.1) oder Vertiefung und an der dieser Fläche zugewandten Fläche des Flansches (4) eine komplementär dazu ausgebildete Vertiefung (4.1) oder Erhebung ausgebildet sind.

5. Greiferelement nach einem der vorhergehenden Ansprüche, **dadurch gekennzeichnet, dass** eine dem Flansch (4) zugewandte Stirnfläche des Befestigungselements (2), die im fixierten Zustand am Flansch (4) anliegt, in einem schrägen Winkel geneigt und/oder zwischen der dem Flansch zugewandten Stirnfläche des Befestigungselements (2) und dem Flansch (4) eine Gleitscheibe angeordnet ist.

6. Greiferelement nach einem der vorhergehenden Ansprüche, **dadurch gekennzeichnet, dass** Basiselement (6) und Befestigungselement (2) mittels Schraub- oder Bajonettverbindung miteinander verbindbar sind.

7. Greiferelement nach einem der vorhergehenden Ansprüche, **dadurch gekennzeichnet, dass** am Basislelement (6) ein Anschlag (6.2) als Begrenzungselement für eine Bewegung des Befestigungselements (2) vorhanden ist.

8. Greiferelement nach einem der vorhergehenden Ansprüche, **dadurch gekennzeichnet, dass** am radial äußeren Rand des Flansches (4) mindestens eine Ausformung ausgebildet ist.

9. Greiferelement nach einem der vorhergehenden Ansprüche, **dadurch gekennzeichnet, dass** mehrere Biegeelemente (5) mit einem Basiselement (6) verbindbar sind.

## Claims

1. Gripper element having at least one bending element that can be deformed elastically in a preferred direction, and a support, in which a bending element (5) formed of elastically deformable material, provided with an opening on a front side and otherwise internally hollow, has, in a region not designed to be bent, in which the opening is also arranged, a radially circumferential, projecting flange (4), which is formed such that it rests with one surface on a surface of a base element (6) of the support (7), and rests with an opposite surface on a surface of a fixing element (2), which can be connected to the base element (6), and the fixing element (2) presses the flange (4) with a predefinable compressive force against the surface of the base element (6), **characterized in that** one region of the bending element (5), which extends in the direction of the opening starting from the flange (4), is formed to be hollow cylindrical, internally hollow elliptical or polygonal, so that a connecting piece (1), via which a fluid can be led into and out of the interior of the bending element (5), can be inserted there or a connecting piece (1) is an integral constituent part of the bending element (5).

2. Gripper element according to Claim 1, **characterized in that** the outer surface of the connecting piece (1) and/or the inner surface of the hollow cylindrical region of the bending element (5) has a profile.

3. Gripper element according to one of the preceding claims, **characterized in that** the connecting piece (1) is held and fixed on the base element (6) by the fixing element (2), and/or the fixing element (2) and the connecting piece (1) are formed as one part.

4. Gripper element according to one of the preceding claims, **characterized in that** an elevation (6.1) or depression running around the bending element (5) is formed on the surface on which the flange (4) rests on the base element (6), and a depression (4.1) or elevation designed to be complementary thereto is formed on the surface of the flange (4) that faces this surface.

5. Gripper element according to one of the preceding claims, **characterized in that** an end face of the fixing element (2), which faces the flange (4) and which rests on the flange (4) when fixed, is inclined at an oblique angle and/or a sliding washer is arranged between the end face of the fixing element (2) that faces the flange and the flange (4).

6. Gripper element according to one of the preceding claims, **characterized in that** base element (6) and fixing element (2) can be connected to each other by means of a screw or bayonet connection.

7. Gripper element according to one of the preceding claims, **characterized in that** there is a stop (6.2) on the base element (6) as a limiting element for movement of the fixing element (2).

8. Gripper element according to one of the preceding claims, **characterized in that** at least one shape is formed on the radially outer edge of the flange (4) .

9. Gripper element according to one of the preceding claims, **characterized in that** a plurality of bending elements (5) can be connected to a base element (6).

## Revendications

1. Organe de préhension, avec au moins un élément courbe déformable élastiquement dans une direction préférentielle et avec un support, dans lequel un élément courbe (5), muni d'une ouverture sur un côté frontal et pour le reste creux intérieurement, formé d'un matériau déformable élastiquement, dans une zone non prévue pour la flexion dans laquelle est également disposée l'ouverture, comporte une bride (4) en saillie radialement sur la périphérie qui est constituée de telle sorte qu'elle repose par une surface sur une surface d'un élément de base (6) du support (7) et, par une surface opposée, sur une surface d'un élément de fixation (2) qui peut être raccordé à l'élément de base (6), et l'élément de fixation (2) presse la bride (4), avec une force de pression pouvant être prédéfinie, contre la surface de l'élément de base (6), **caractérisé en ce qu'**une zone de l'élément courbe (5) qui s'étend à partir de la bride (4) en direction de l'ouverture est constituée en forme de cylindre creux, de façon elliptique creuse intérieurement ou polygonale, de telle sorte qu'à cet endroit une tubulure de raccordement (1), par le biais de laquelle un fluide peut être acheminé et évacué de l'intérieur de l'élément courbe (5), peut être introduite, ou une tubulure de raccordement (1) fait partie intégrante de l'élément courbe (5).

2. Organe de préhension selon la revendication 1, **caractérisé en ce que** la surface extérieure de la tubulure de raccordement (1) et/ou la surface intérieure de la zone, en forme de cylindre creux, de l'élément courbe (5) comporte un profilage.

3. Organe de préhension selon l'une des revendications précédentes, **caractérisé en ce que** la tubulure de raccordement (1) est retenue sur l'élément de base (6) de façon fixée avec l'élément de fixation (2) et/ou **en ce que** l'élément de fixation (2) et la tubulure de raccordement (1) sont constitués en une seule partie.

4. Organe de préhension selon l'une des revendications précédentes, **caractérisé en ce que**, sur la surface sur laquelle la bride (4) est adjacente à l'élément de base (6), il est constitué une bosse (6.1) ou une dépression toute courant autour de l'élément courbe (5) et, sur la surface de la bride (4) tournée vers cette surface, il est constitué de façon complémentaire à cela une dépression (4.1) ou bosse.

5. Organe de préhension selon l'une des revendications précédentes, **caractérisé en ce qu'**une surface frontale de l'élément de fixation (2) qui est tournée vers la bride (4) et qui, dans l'état fixé, est adjacente à la bride (4), est inclinée en formant un angle oblique et/ou un disque de glissement est disposé entre la surface frontale de l'élément de fixation (2) tournée vers la bride et la bride (4).

6. Organe de préhension selon l'une des revendications précédentes, **caractérisé en ce que** l'élément de base (6) et l'élément de fixation (2) peuvent être raccordés l'un à l'autre au moyen d'un raccordement à vis ou à baïonnette.

7. Organe de préhension selon l'une des revendications précédentes, **caractérisé en ce que**, sur l'élément de base (6), il y a une butée (6.2) en tant qu'élément de limitation d'un mouvement de l'élément de fixation (2).

8. Organe de préhension selon l'une des revendications précédentes, **caractérisé en ce que**, sur le bord extérieur radialement de la bride (4), il est constitué au moins une déformation.

9. Organe de préhension selon l'une des revendications précédentes, **caractérisé en ce que** plusieurs éléments courbes (5) peuvent être raccordés à un élément de base (6).
